# EUROPEAN PATENT SPECIFICATION

(11) **EP 1 517 867 B1**
(45) Date of publication and mention of the grant of the patent: **04.06.2008**
(21) Application number: 03761501.0
(22) Date of filing: 25.06.2003
(51) Int. Cl.: C03C 25/14, C03B 37/05

(54) **APPARATUS AND PROCESS FOR PRODUCING MINERAL FIBRES USING A ROTOR AND INCLUDING A BINDER SUPPLY**
VORRICHTUNG UND VERFAHREN ZUR HERSTELLUNG VON MINERALFASERN MITTELS EINES ROTORS MIT BINDEMITTEL BESCHICKER
APPAREIL DE PRODUCTION DE PRODUITS FIBREUX VITREUX ARTIFICIELS NON TISSES

(30) Priority: 28.06.2002 EP 02254558
(43) Date of publication of application: 30.03.2005
(73) Proprietor: Rockwool International A/S, 2640 Hedehusene (DK)
(72) Inventor: JENSEN, Gorm, Rosenberg, DK-4295 Stenlille (DK)
(74) Representative: Samuels, Lucy Alice
(86) International application number: PCT/EP2003/006679
(87) International publication number: WO 2004/002913

(56) References cited:
- EP-A- 0 367 194
- WO-A-88/07980
- WO-A-97/17305
- SE-B- 452 150

## Description

This invention relates to apparatus for making man-made vitreous fibre (MMVF) products which are bonded, and in particular it relates to fiberising apparatus which is modified so as to result in an improved distribution of binder in the final product.

Bonded MMVF products are conventionally made by centrifugally fiberising a mineral melt using a centrifugal fiberising rotor mounted for rotation on an axis extending out of a housing, forming fibres centrifugally off this rotor, conveying them towards a collector in a stream of air that flows from around the rotor towards the collector, and collecting them on the collector, and applying binder on to the fibres before they are collected on the collector.

The transport air for conveying the fibres from around the rotor towards the collector is provided from air supply ducts positioned around and behind the rotor, spaced some distance away from the fiberising surface. The collector is usually an apertured conveyor which travels through a collecting chamber. Suction is applied through the collector so that the fibres are collected as a web which is transported out of the chamber on the conveyor.

It is well known to provide additionally an air blast travelling towards the collector but in the form of a wall jet over the fiberising surface. The attainment of a wall jet requires that the air blast is very close to, and often at, the fiberising surface. The provision of this air blast as a wall jet improves the fiberisation at the fiberising surface. Thus it is conventional to provide this "primary" air blast at the fiberising surface and the transport, or "secondary", air supply radially spaced away from the fiberising surface. The primary air contributes to the total amount of moving air by which the cloud of fibres is carried to the collector.

It is commercially and technically necessary that the maximum amount of binding effect should be achieved using a minimum amount of binder. For instance the final products are often used for high temperature insulation and they may be categorised according to the amount of organic residue (of which binder is usually the major component) in the product. It is therefore necessary to achieve very uniform distribution of the binder in the collected product.

A simple way of applying binder is to spray it on to the cloud of fibres as they are conveyed in the moving air between the fiberising rotor and the collector. In an attempt at improving distribution, the binder is sprayed into the cloud in a finely atomised form. Atomising the binder necessitates that the binder supply is under high pressure, and thus this necessitates special equipment and extra energy consumption.

In order to improve distribution of the binder, it is known to spray atomised binder on to the fibres at various positions relatively close to where they are initially formed.

In particular, it is well known to spray atomised binder radially outwards coaxial with and just in front of the fiberising surface, so that the fibres which have been formed on the surface are immediately blown into an outwardly directed spray of binder. Examples are shown in WO87/07887 and GB-A-1169034.

It is also known to spray atomised binder into the secondary or transport air behind the fiberising surface, so that the air carries the binder droplets when it first entrains the fibres. This is described in SE-B-452,150. In practice this proposal does not seem to provide any significant advantage over spraying atomised binder at any of the other customary points used previously.

WO97/17305 also describes introducing the binder through the secondary air stream, distant from the fiberising surface. In particular, it describes introducing the binder through a binder supply duct which extends substantially coaxially through a duct for the supply of secondary air distant from the fiberising surface, and which appears to open coaxially into the duct. The description of how the binder is discharged is unclear but either it has to be atomised in the usual way, or if it is merely ejected then the coaxial ejection of the liquid will result in poor distribution of the binder in the secondary air stream and, therefore, in the final collected product. Efficient atomisation of the binder usually requires a significant pressure drop across the spray orifices which are used for atomisation. This requires energy, and any attempt at reducing the energy input tends to result in a coarser spray of binder droplets, which is undesirable.

EP 367194 describes contacting the fibres with silane prior to binder whereby the silane is added to a stream of air advanced along the rotor. Silane is relatively easy to atomise. The binder is introduced to the secondary air stream in conventional manner.

It would be desirable to provide a way of introducing the binder so as to ensure improved distribution of binder in the collected product. It would also be desirable to provide this in a manner that avoids the need for providing extra equipment and energy for atomising the binder.

According to the invention we provide apparatus for centrifugally fiberising a mineral melt, wherein the apparatus comprises a housing, at least one centrifugal fiberising rotor mounted for rotation on an axis extending out of a face of the housing and having a substantially cylindrical fiberising surface having a fiberising zone, and wherein substantially annular air supply means open out of the face around the fiberising surface adjacent to the housing for directing an air blast comprising a wall jet over the fiberising surface and away from the face of the housing. There are means for applying binder on to fibres formed centrifugally off the fiberising surface, and in the invention these means comprise at least one binder supply duct in or on the housing and which leads to an outlet positioned to extrude binder into the air blast upstream of the fiberising zone. The binder is extruded into the air blast substantially transverse or countercurrent to the direction of the air blast and is thereby atomised by the air blast.

Thus, in the invention the binder is ejected into the air blast, and in particular into or on to the wall jet, before the wall jet interacts with the melt on the surface to facilitate the formation of the fibres in the fiberising zone. Thus binder is in the air stream that facilitates the formation of fibres off the fiberising surface. Accordingly, the invention leads to distribution of the binder on and around the fibres as they are thrown initially off the fiberising surface and, as a result, the invention achieves more uniform distribution of binder throughout the cloud of fibres which travels from the fiberising rotor to the collector. Accordingly, the invention results in more uniform distribution of binder in the final collected product.

The binder is in atomised form as it is carried by the air stream towards the fiberising zone. Conventional binder supply outlets are designed so that atomisation is due predominantly to the pressure drop through the orifice. However this would require a high over pressure in the binder supply duct. In the invention the outlet is constructed so that atomisation is due predominantly to the shear between the ejected binder and the air blast. In particular, the binder is extruded into the air blast substantially transverse or counter to the direction of the air blast, whereby the air blast atomises the binder. The binder outlet is therefore preferably shaped and positioned so that the binder is extruded substantially counter or transverse to the air blast in such a manner that the extruded binder is subjected to sufficiently high shear as it emerges from the outlet that effective atomisation occurs. Accordingly it is no longer necessary to use high pressures for atomising the binder and, instead, it is merely necessary to have a sufficient, but small, over pressure in the binder duct to cause extrusion into the air blast, and then the energy in the air blast will cause the atomisation.

The normal construction of the apparatus therefore utilises a binder supply duct which has a bore extending along its length and the extrusion outlet can then simply be a substantial continuation of the bore. Thus, it is not necessary to have a spray nozzle and, instead, the extrusion outlet can be a relatively simple opening. This can have substantially the same shape and diameter as the bore or can, if desired, have a narrower diameter or a greater diameter than the bore. The bore may be divided at the outlet into a plurality of narrow bores which are insufficient by themselves to cause atomisation but which promote the subsequent atomisation upon extrusion into the air blast. Alternatively, the bore may lead to an outlet which is a slot which is usually longer and thinner than the bore and which is usually substantially transverse or countercurrent to the air stream. Irrespective of the precise shape and construction of the substantial continuation of the bore which defines the extrusion outlet, this outlet is of much simpler construction than is required for normal atomisation outlets. If the outlet is narrower than the bore, a filter should be provided upstream of the outlet in order to prevent blockage of the outlet.

The extrusion outlet should be positioned so as to expose the binder to sufficient shear by the air blast to cause atomisation (i.e., conversion of the binder into fine droplets). Extrusion which is substantially co-current with the air blast minimises shear and will not cause atomisation. The outlet is therefore normally arranged to extrude substantially transverse to the direction of the air stream or substantially counter to the direction of the air stream (and therefore, in practice, to the plane of the fiberising surface). Often the direction of the outlet is transverse (perpendicular) to the fiberising surface and the air stream but it may be inclined slightly cocurrent to the air stream but the angle to the perpendicular must be kept small (e.g., below 20°) since increasing the angle decreases the shear. Often the angle to the perpendicular is from +20° (i.e., slightly cocurrent) to -120°, and usually is between +10° to -100°. Often it is +10° to -10° or -80° to -100°. Simple arrangements have the outlet extruding at 0° or -90°, i.e., transverse or countercurrent to the air stream.

The substantially annular air supply means are usually defined outwardly by an outer wall spaced radially outwards from the fiberising surface and they are usually defined inwardly by a surface which is on the plane of the fiberising surface or may be spaced radially slightly inwards or outwards. It is necessary that any radial spacing of the inner wall of the air supply means from the fiberising surface must not be so great that the air merely acts as secondary or conveying air and does not create a wall jet along the fiberising surface. Usually any such spacing is not more than about 10 or 15mm at the most, but suitable spacings can be found by experimentation since no wall jet will be formed if the spacing is too great.

Suitable arrangements of substantially annular air supply means are known and some are described in, for instance WO92/06047. The annular air supply means may be a row of orifices arranged as an annulus (in which event the outer wall of each orifice is to be considered as the outer wall of the annular air supply means). Alternatively the annular air supply means may be an open annular passage, optionally containing direction blades as described in WO92/06047.

The annular passage may extend entirely around the periphery of the rotor or, more usually, only partially around the periphery of the rotor, for instance as described in WO92/06047.

The binder extrusion outlet usually opens into the substantially annular air supply means or immediately downstream of the air supply means (i.e., where they open out of the front of the housing). In order to optimise the shear forces on the binder and, in particular, to optimise atomisation of the binder while minimising the risk of smearing of the binder along the walls of the air supply passage, it is desirable for the extrusion outlet to be positioned radially inwards from the part of the outer wall (or radially outwards from the part of the inner wall) which is in or immediately downstream of the air supply means. Thus it is desirable that the binder supply duct should extend through the inner or outer wall and define, with the inner or outer wall, a radial step immediately downstream of the duct. This results in the shear created by the wall jet shearing the extruded binder into the air blast in preference to smearing it along the inner or outer wall.

Generally the binder supply duct extends substantially radially through and inwards of the outer wall around the entire periphery of the extrusion outlet from the duct. Thus there is a radial step around the entire periphery of the outlet. It is generally desirable that this step is not so large that the binder is ejected so close radially to the fiberising surface that it contacts the fiberising surface and coats it, despite the wall jet. Preferably therefore the outlet is radially sufficiently far away from the fiberising surface that the wall jet prevents contamination of the fiberising surface by the binder. Usually this means that the outlet opens at a position which is radially closer to the outer wall than to the fiberising surface, and usually the outlet is in the outermost one third or one quarter of the radial distance between the outer wall of the annular air supply means and the fiberising surface.

Alternatively, the binder supply duct extends substantially radially through and outwards of the inner wall, in which event the same considerations apply to the design of the radially inwards step immediately downstream of the duct.

On a strict aerodynamic consideration, a true wall jet may exist only over the fiberising surface for a relatively shallow radial depth and so it is not essential that the binder should be ejected into the actual wall jet. It is sufficient if the binder is ejected into the air blast in a position such that the shear created by the air blast, including the wall jet, will provide the effects which are discussed above and which are desired. Thus the binder may either be ejected into the actual wall jet or it may be ejected on to the wall jet, in the sense that it is upstream of the fiberising zone and is ejected substantially radially inwards and close to the wall jet. Routine experimentation will easily find a suitable radial position for the outlet. The number and spacing of binder outlets may be selected to provide a sufficiently uniform distribution of binder and can easily be determined, for any particular pattern of air flows, by routine experimentation.

Ejection on to the wall jet rather than into the wall jet may be preferred when the binder is particularly heat sensitive or flammable. This can prevent excessive binder burn-off which is more likely to occur at the high temperatures experienced close to the fiberising surface (ie. in the wall jet) than in the cooler part of the air blast. In this case and when binder is being ejected from an extrusion outlet positioned radially through and inwards of the outer wall, it may be desirable to provide a baffle plate to substantially prevent the binder from entering the wall jet to such an extent that it is overheated by the fiberising surface.

There may be more than one binder supply duct for supplying binder on to or into the wall jet on the rotor. For instance there may be a plurality of binder supply ducts arranged around the annular air supply means. They may be substantially equidistant from each other and/or they may be at varying spacing. The size of each and their respective spacings may be selected so as to allow for the amount of binder applied at each point around the rotor to be selected according to the amount of fibre being produced at that point. The ejected binder will spread in the air blast in a fan shape and preferably the fan of atomised binder from one outlet merges with the fan of atomised binder from adjacent outlets, so as to optimise uniformity of binder distribution.

The apparatus of the invention may be of the type where the rotor is mounted for rotation about a substantially vertical axis. For instance the rotor may then be a cup or disc and the melt may be poured into the cup or on to the disc and thrown off the outer rim of the cup or disc. This outer rim then serves as the fiberising zone and the fiberising surface.

Alternatively, the rotor may be mounted for rotation about a substantially vertical axis and may be a cup wherein the fiberising surface is the side wall of the cup, this side wall being perforated. The region where there are perforations then serves as the fiberising zone. In such an apparatus, melt is poured into the cup and is extruded centrifugally through the orifices and is centrifugally attenuated, partially by means of the wall jet.

The preferred apparatus is apparatus in which the fiberising rotor is a substantially continuous surface on to which the mineral melt is poured and off which fibres are formed. The fiberising zone is the region of the cylindrical surface on to which melt is applied. The substantially cylindrical fiberising surface rotates about a substantially horizontal axis. Generally a motor is mounted in the housing for driving an axle on which the rotor is mounted.

The total spinning apparatus may have only one such fiberising rotor, but the preferred apparatus is a cascade spinner comprising a top rotor and a plurality of counter-rotating fiberising rotors, wherein the rotors are each mounted on the front face of the housing for rotation about a different substantially horizontal axis and are arranged such that when the rotors are rotating mineral melt that is poured on to the periphery of the top rotor in the set is thrown on to the periphery of the fiberising rotor or, when there is more than one fiberising rotor, on to each subsequent fiberising rotor in sequence, and MMV fibres are thrown off the or each fiberising rotor. If desired the top rotor also can be a rotor provided with annular air supply means and the binder supply duct as discussed above, but this is usually unnecessary.

It is sufficient, in the invention, if only one fiberising rotor having associated annular air supply means is provided with the described binder supply duct or ducts, but preferably some or all of the fiberising rotors are provided with the binder supply duct or ducts.

The invention is illustrated in the accompanying drawings in which
Figure 1 is a front view of a cascade spinner according to the invention,
Figure 2 is a lengthwise cross section of apparatus according to the invention including means for collecting the fibres, and
Figures 3 to 6 are each an enlarged cross section of part of Figure 1 on the line III-III.

The apparatus consists of a set 1 of counter-rotating rotors mounted on the front face 2 of a single housing 3. If desired, each rotor may be mounted, instead, on its own individual housing, and the housings are generally then interconnected.

Each rotor is mounted in conventional manner on a driven axle that allows it to be rotated at high peripheral speed. The illustrated set consists of four rotors, a relatively small top rotor 4 that rotates anti-clockwise, a first subsequent fiberising rotor 5 that rotates clockwise, a second subsequent fiberising rotor 6 that rotes anti-clockwise, and a third subsequent fiberising rotor 7 that rotates clockwise. Naturally the positions of the rotors could alternatively be arranged in a pattern which is a mirror image of the illustrated pattern. The bearings and drive mechanisms are not shown. Annular air slots 8, 9 and 10 are associated with, respectively, the fiberising rotors 5, 6 and 7, each slot extending around part only of the rotor. Generally each slot extends around at least 1/3 of the periphery of its associated rotor, generally around the outer part of the set of rotors. Generally it extends around not more than 2/3 or 3/4 of the periphery.

Each slot leads from an air supply chamber within the housing.

Molten mineral melt is poured on to the top rotor 4 along path 11 and the majority of it is thrown (along a diffuse path shown diagrammatically as 12) on to subsequent rotor 5. Some of the melt is fiberised off that rotor whilst the remainder is thrown on to subsequent rotor 6. A significant amount of this is fiberised off rotor 6, mainly in the area where there is slot 9, but some is thrown on to the subsequent rotor 7 off which it is mainly fiberised.

The annular slots 8, 9 and 10 are located in the peripheral positions of each rotor where most of the fiberisation occurs.

Within each slot, blades (not shown) are mounted transverse to the slot so as to divide the slot to an annular row of orifices.

The inner wall of each slot is preferably coaxial with the associated rotor and preferably has a diameter that is substantially the same as the associated rotor. Preferably the diameters are identical but the inner edge of the slot can have a slightly larger diameter but it is desirable that any such increase in diameter should be sufficiently small that a wall jet effect is still achieved as the air flows out of the slot and across the surface of the rotor. Accordingly if the slot has an inner diameter that is more than a few millimetres greater than the outer diameter of the rotor, it is generally desirable for the slot to direct the air stream as a slightly inwardly converging air stream so as to be directed at a small angle on to the surface and form a wall jet with it; WO88/07980 is an example of such an arrangement.

Provided that the inner wall of each slot is radially close to the fiberising surface, a wall jet over the fiberising surface will be formed if the rate of air flow through the annular slot is sufficiently high. The presence of a wall jet can easily be identified by monitoring the velocity profile adjacent to the surface. When a wall jet exists, the greatest velocity is close (e.g., within 10mm) to the surface both at the rear edge (16) of the rotor and at the front edge (17) of the rotor.

Conventional binder sprays 18 may be mounted as a central nozzle on the front face of each rotor and eject binder into the fibres that are blown off the rotor. Instead of or in addition to this, separate binder sprays may be provided, for instance beneath or above the set of rotors and directed substantially inwards, often inwards and forward. For instance, sprays 18 beneath the set of rotors will mainly be directed upwards and forwards.

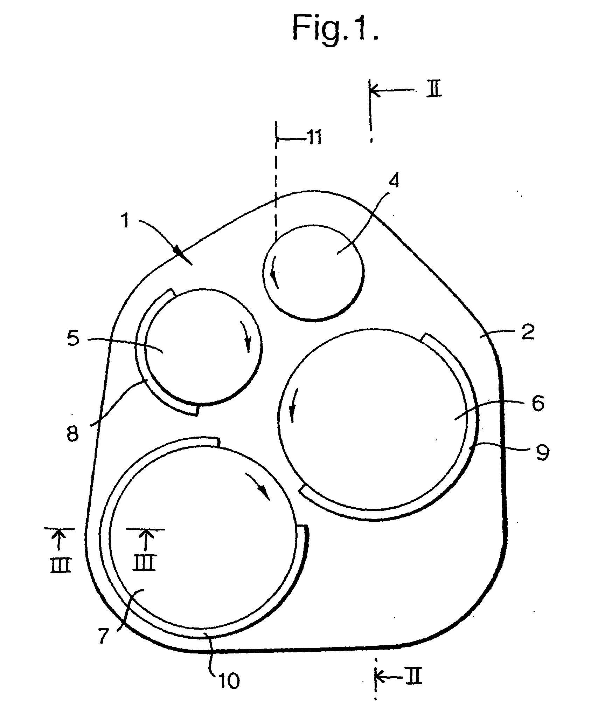

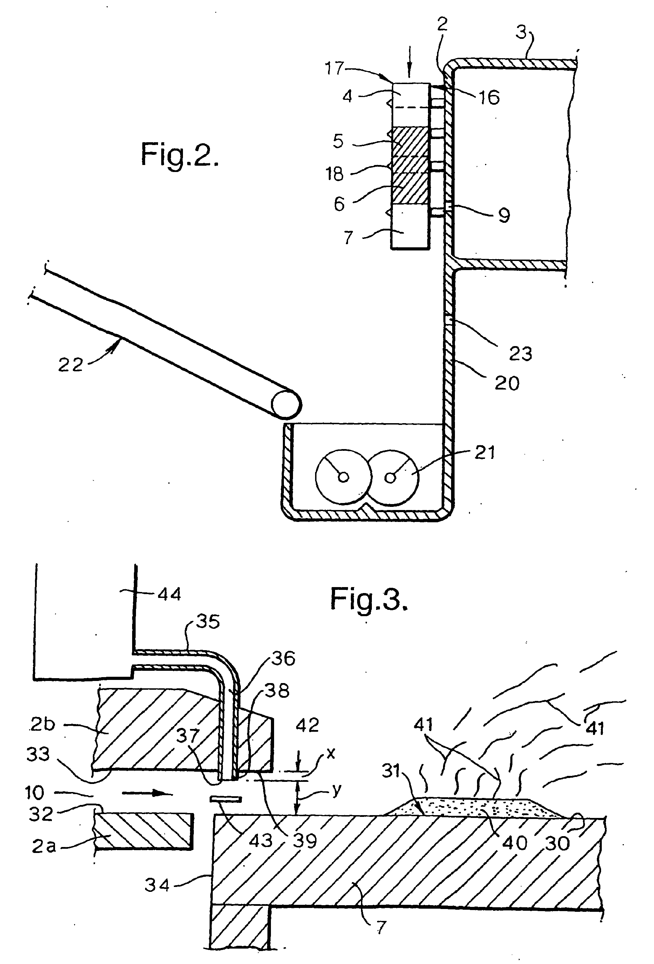

Secondary or transport air is blown from around the housing, for instance through an air ring (not shown) which surrounds the housing 2 in Figure 1, and/or through orifices such as 23 in Figure 2. In preferred systems, secondary air is induced through a duct which contains the fiberising apparatus and which leads into a collecting chamber, for instance as described in WO96/38391. As fibres are formed off the fiberising rotors 5, 6 and 7 they are entrained in this secondary air stream (and also by the air blasted through the annular slots 8, 9, 10) and carried through a conventional collecting chamber to a collector, shown diagrammatically as 22. Waste and other material drops into the pit 20 from which it is removed by a double screw 21, for recycling to the furnace which provided the melt. Suction is applied through the conveyor 22 so that a web of fibres is built up on the web and is carried out of the collection chamber.

This web, containing binder, is then subjected to conventional processes including curing. For instance it is often subjected to cross lapping, consolidation and then heat curing of the binder.

In the invention, there are one or more additional binder outlets distributed at a plurality of positions around at least one, and preferably all, of the air slots 8, 9 and 10. Figures 3 to 6 show four different arrangements.

In Figure 3, the fiberising rotor 7 has an outer, cylindrical, fiberising surface 30. Melt, shown diagrammatically at 40, is applied on to the fiberising zone 31 in conventional manner and is thrown off as fibres shown diagrammatically as 41. In practice the arrangement of the melt 40 on the surface 30 will be much more complex than is illustrated, for instance usually with a lower layer of solidified melt and a thin upper layer of molten melt.

The annular air slot 10 is defined by the passage between an inner wall 32 and an outer wall 33. An air blast is forced through this, in the direction shown by the arrow, in conventional manner. There may be blades across the passage, as indicated above. The outer wall 33 extends over the innermost end 34 of the rotor 7 to its edge 42, but this is not essential.

A binder supply duct 35 leads through the housing from a reservoir for supply of binder 44. The duct 35 has a bore 36 of substantially uniform diameter and this bore terminates in an extrusion outlet 37 which, in this particular example, consists merely of the open end of the bore 36. The duct 35 extends through the outer wall 33 by a distance x, thereby creating a radial step 38 having a depth x all around the outlet 37. It is particularly desirable to have such a step on the downstream side (i.e., towards the melt 40) at least of the outlet 37 so as to reduce the risk of smearing of the binder on the part 39 of the outer wall between the binder outlet and the outermost edge 42 of the outer wall. If desired, the radial step 38 may be achieved by terminating the outlet 37 in the plane of the wall 33 and forming a recess in the outer wall at the position 38, so as to give the step.

The total depth of the annular slot, x+y, is selected in accordance with conventional practice and, depending upon the rate of air blast through that slot, typically is from 10 to 30mm. The wall jet may extend over the entire depth y but it is merely sufficient if there is wall jet over the surface 30 in the zone 31 where the melt 40 is applied. Optionally a baffle plate 43 can be included to prevent the binder from entering too far into the wall jet.

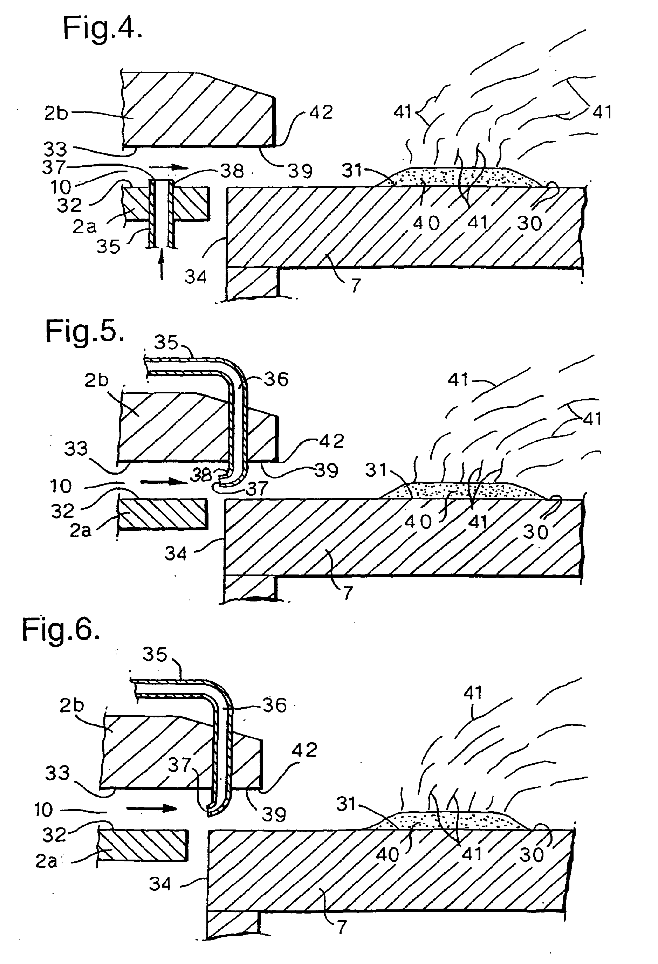

In Figure 4, the binder supply duct extends through the inner wall 32, and defines a step 38.

In Figure 5, the outlet 37 ejects countercurrent to the air stream, i.e., at an angle of -90° to the perpendicular to the air stream and the surface 30.

In Figure 6, the bore tapers to an outlet slot 37 extending transverse to the air stream and discharges closer to the surface 30 and countercurrent to the air stream.

## Claims

1. Apparatus for centrifugally fiberising a mineral melt comprising
a housing (3) having a front (2)
at least one centrifugal fiberising rotor (5, 6, 7) mounted for rotation on an axis extending out of the front (2) of the housing (3) and having a substantially cylindrical fiberising surface (30) having a fiberising zone (31) and off which fibres (41) may be formed centrifugally,
substantially annular air supply means (8, 9, 10) which open out of the front (2) around and adjacent to the fiberising surface (30) for directing an air blast comprising a wall jet over the fiberising surface (30) and away from the front (2) of the housing (3), and
means for applying binder on to the fibres (41) formed centrifugally off the fiberising surface (30),
**characterised in that** the means for applying binder comprise at least one binder supply duct (35) in or on the housing (3) and which leads to an extrusion outlet (37) positioned to extrude binder into the air blast upstream of the fiberising zone (31) substantially transverse or countercurrent to the direction of the air blast for atomisation by the air blast.

2. Apparatus according to claim 1 wherein the binder extrusion outlet (37) opens into, or immediately downstream of, the substantially annular air supply means (8, 9, 10) and the binder supply duct (35) leads through the housing (3) from a reservoir (44) for supply of binder.

3. Apparatus according to any preceding claim wherein the extrusion outlet (37) is positioned to extrude the binder on to the wall jet.

4. Apparatus according to any preceding claim in which the binder supply duct (35) has a bore (36) along its length and the extrusion outlet (37) is a substantial continuation of the bore.

5. Apparatus according to any preceding claim in which the extrusion outlet is positioned to extrude the binder in a direction of +10° to -100° to the perpendicular to the plane of the fiberising surface (30).

6. Apparatus according to any preceding claim in which the substantially annular air supply means are defined outwardly by an outer wall (33) spaced radially outwards from the fiberising surface (30) and the outlet (37) is positioned radially distant from the fiberising surface (30) and radially inwards from the outer wall.

7. Apparatus according to claim 6 in which the binder supply duct (35) extends radially through and inwards of the outer wall (33) around the entire periphery of the outlet (37).

8. Apparatus according to claim 7 comprising a baffle plate (43) positioned radially inwards of the extrusion outlet (37) for substantially preventing the binder from entering the wall jet.

9. Apparatus according to any preceding claim in which the fiberising surface (30) is a substantially continuous surface which is mounted for rotation about a substantially horizontal axis and on to which mineral melt may be applied and off which fibres (41) are formed.

10. Apparatus according to claim 9 comprising a motor mounted in the housing for driving an axle on which the rotor is mounted.

11. Apparatus according to claim 9 or claim 10 comprising a top rotor (4) and a plurality of centrifugal fiberising rotors (5, 6, 7) each mounted about a different substantially horizontal axis and arranged such that when the rotors are rotating mineral melt that is poured on to the periphery of the top rotor (4) is thrown on to the periphery of each subsequent fiberising rotor (5, 6, 7) in sequence and mineral fibres (41) are thrown off each fiberising rotor, and wherein at least one of the fiberising rotors is provided with the annular air supply means (8, 9, 10) and the at least one binder supply duct (35) is positioned to eject binder into the air blast as defined in any of claims 1 to 6.

12. A process for making a bonded vitreous fibre product comprising fiberising a mineral melt utilising apparatus according to any preceding claim whilst providing an air blast comprising a wall jet over the fiberising surface (30) and whilst applying binder through the binder supply duct (35) and the extrusion outlet (37) into the air blast, collecting the fibres (41) carrying binder as a web, and curing the binder.

## Patentansprüche

1. Vorrichtung zum Schleuderzerfasern einer mineralischen Schmelze, umfassend
ein Gehäuse'(3) mit einer Vorderseite (2),
mindestens einen Schleuderzerfaserungsrotor (5, 6, 7), der zur Rotation auf eine Achse montiert ist und sich von der Vorderseite (2) des Gehäuses (3) heraus erstreckt und eine im wesentlichen zylindrische Zerfaserungsoberfläche (30) mit einer Zerfaserungszone (31) aufweist, von der Fasern (41) zentrifugal gebildet werden können,
eine im wesentlichen ringförmige Luftzufuhreinrichtung (8, 9, 10), die an der Vorderseite (2) um und benachbart zu der Zerfaserungsoberfläche (30) mündet, um einen Luftstoß umfassend einen Wandstrahl über die Zerfaserungsoberfläche (30) und weg von der Vorderseite (2) des Gehäuses (3) zu richten, und
eine Einrichtung zum Aufbringen von Bindemittel auf die Fasern (41), die zentrifugal weg von der Zerfaserungsoberfläche (30) gebildet werden,
**dadurch gekennzeichnet, dass** die Einrichtung zum Aufbringen von Bindemittel mindestens einen Bindemittelzufuhrkanal (35) in oder auf dem Gehäuse (3) umfasst, der zu einem Extrusionsauslass (37) führt, der positioniert ist, um Bindemittel in den Luftstoß stromaufwärts von der Zerfaserungszone (31) im wesentlichen quer zur oder gegen die Richtung des Luftstoßes zur Zerstäubung durch den Luftstoß auszustoßen.

2. Vorrichtung nach Anspruch 1, bei der der Bindemittel-Extrusionsauslass (37) sich in die oder unmittelbar stromabwärts von der im wesentlichen ringförmigen Luftzufuhreinrichtung (8, 9, 10) öffnet und der Bindemittelzufuhrkanal (35) durch das Gehäuse (3) von einem Reservoir (44) für die Zuführung von Bindemittel führt.

3. Vorrichtung nach irgendeinem vorhergehenden Anspruch, bei der der Extrusionsauslass (37) positioniert ist, um das Bindemittel auf den Wandstrahl auszustoßen.

4. Vorrichtung nach irgendeinem vorhergehenden Anspruch, bei der der Bindemittelzufuhrkanal (35) eine Bohrung (36) entlang seiner Länge aufweist und der Extrusionsauslass (37) im wesentlichen eine Fortsetzung der Bohrung ist.

5. Vorrichtung nach irgendeinem vorhergehenden Anspruch, bei der der Extrusionsauslass positioniert ist, um das Bindemittel in einer Richtung von +10° bis -100° zur Senkrechten zur Ebene der Zerfaserungsoberfläche (30) auszustoßen.

6. Vorrichtung nach irgendeinem vorhergehenden Anspruch, bei der die im wesentlichen ringförmige Luftzufuhreinrichtung nach außen durch eine Außenwand (33) bestimmt ist, die radial auswärts von der Zerfaserungsoberfläche (30) beabstandet ist, und der Auslass (37) radial entfernt von der Zerfaserungsoberfläche (30) und radial einwärts von der Außenwand positioniert ist.

7. Vorrichtung nach Anspruch 6, bei der der Bindemittelzufuhrkanal (35) sich radial durch und einwärts von der Außenwand (33) um die ganze Peripherie des Auslasses (37) herum erstreckt.

8. Vorrichtung nach Anspruch 7, umfassend eine Prallplatte (43), die radial einwärts von dem Extrusionsauslass (37) positioniert ist, um im wesentlichen zu verhindern, dass das Bindemittel in den Wandstrahl gelangt.

9. Vorrichtung nach irgendeinem vorhergehenden Anspruch, bei der die Zerfaserungsoberfläche (30) eine im wesentlichen kontinuierliche Oberfläche ist, die zur Rotation um eine im wesentlichen horizontale Achse montiert ist und auf der mineralische Schmelze aufgebracht werden kann und von der weg Fasern (41) gebildet werden.

10. Vorrichtung nach Anspruch 9, umfassend einen Motor, der in dem Gehäuse montiert ist, um eine Welle anzutreiben, auf der der Rotor montiert ist.

11. Vorrichtung nach Anspruch 9 oder Anspruch 10, umfassend einen oberen Rotor (4) und eine Mehrzahl von Schleuderzerfaserungsrotoren (5, 6, 7), die jeweils um eine verschiedene im wesentlichen horizontale Achse montiert sind und so angeordnet sind, dass, wenn sich die Rotoren drehen, mineralische Schmelze, die auf die Peripherie des oberen Rotors (4) gegossen wird, auf die Peripherie jedes nachfolgenden Zerfaserungsrotors (5, 6, 7) der Reihe nach geworfen wird und Mineralfasern (41) von jedem Zerfaserungsrotor weggeschleudert werden, und wobei mindestens einer der Zerfaserungsrotoren mit der ringförmigen Luftzufuhreinrichtung (8, 9, 10) versehen ist und der mindestens eine Bindemittelzufuhrkanal (35) positioniert ist, um Bindemittel in den Luftstoß auszustoßen, wie in irgendeinem der Ansprüche 1 bis 6 definiert.

12. Verfahren zur Herstellung eines gebundenen glasartigen Faserprodukts, umfassend das Zerfasern einer mineralischen Schmelze unter Verwendung einer Vorrichtung nach irgendeinem vorhergehenden Anspruch, während ein Luftstoß umfassend einen Wandstrahl über der Zerfaserungsoberfläche (30) bereitgestellt wird und während Bindemittel durch den Bindemittelzufuhrkanal (35) und den Extrusionsauslass (37) in den Luftstoß gebracht wird, das Sammeln der Bindemittel tragenden Fasern (41) als Bahn und das Härten des Bindemittels.

## Revendications

1. Appareil de fibrage centrifuge d'un produit fondu minéral comprenant
un logement (3) présentant une partie avant (2)
au moins un rotor de fibrage centrifuge (5, 6, 7) monté pour rotation sur un axe s'étendant hors de la partie avant (2) du logement (3) et présentant une surface de fibrage sensiblement cylindrique (30) ayant une zone de fibrage (31) et à partir de laquelle des fibres (41) peuvent être formées par effet centrifuge,
des moyens d'alimentation en air sensiblement annulaires (8, 9, 10) qui s'ouvrent sur la partie avant (2) autour et à côté de la surface de fibrage (30) pour diriger un courant d'air brutal comprenant un jet sur paroi sur la surface de fibrage (30) et en éloignement de la partie avant (2) du logement (3) et,
des moyens pour appliquer un liant sur les fibres (41) formées par effet centrifuge à partir de la surface de fibrage (30),
**caractérisé en ce que** les moyens pour appliquer un liant comprennent au moins un conduit d'alimentation en liant (35) dans ou sur le logement (3) et qui mène à une sortie d'extrusion (37) positionnée pour extruder le liant en amont du courant d'air brutal de la zone de fibrage (31) sensiblement transversale à la direction du courant d'air brutal ou à contre-courant de celle-ci pour l'atomisation par le courant d'air brutal.

2. Appareil selon la revendication 1, dans lequel la sortie d'extrusion de liant (37) s'ouvre dans les moyens d'alimentation en air sensiblement annulaires (8, 9, 10) ou immédiatement en aval de ceux-ci et le conduit d'alimentation en liant (35) traverse le logement (3) à partir d'un réservoir (44) pour une alimentation en liant.

3. Appareil selon l'une quelconque des revendications précédentes, dans lequel la sortie d'extrusion (37) est positionnée pour extruder le liant sur le jet sur paroi.

4. Appareil selon l'une quelconque des revendications précédentes, dans lequel le conduit d'alimentation en liant (35) comporte un alésage (36) sur sa longueur et la sortie d'extrusion (37) est une continuation substantielle de l'alésage.

5. Appareil selon l'une quelconque des revendications précédentes, dans lequel la sortie d'extrusion est positionnée pour extruder le liant dans une direction de +10° à -100° de la perpendiculaire au plan de la surface de fibrage (30).

6. Appareil selon l'une quelconque des revendications précédentes, dans lequel les moyens d'alimentation en air sensiblement annulaires sont définis vers l'extérieur par une paroi externe (33) espacée radialement vers l'extérieur de la surface de fibrage (30) et la sortie (37) est positionnée radialement à distance de la surface de fibrage (30) et radialement vers l'intérieur à partir de la paroi externe.

7. Appareil selon la revendication 6, dans lequel le conduit d'alimentation en liant (35) s'étend radialement à travers et vers l'intérieur de la paroi externe (33) autour de toute la périphérie de la sortie (37).

8. Appareil selon la revendication 7, comprenant une plaque de déviation (43) positionnée radialement vers l'intérieur de la sortie d'extrusion (37) pour empêcher sensiblement le liant d'entrer dans le jet sur paroi.

9. Appareil selon l'une quelconque des revendications précédentes, dans lequel la surface de fibrage (30) est une surface sensiblement continue montée pour rotation autour d'un axe sensiblement horizontal et sur laquelle le produit fondu minéral peut être appliqué et à partir de laquelle des fibres (41) sont formées.

10. Appareil selon la revendication 9, comprenant un moteur monté dans le logement pour entraîner un axe sur lequel est monté le rotor.

11. Appareil selon la revendication 9 ou la revendication 10, comprenant un rotor supérieur (4) et une pluralité de rotors de fibrage centrifuge (5, 6, 7), chacun étant monté autour d'un axe horizontal sensiblement différent et agencé de telle sorte que lorsque les rotors tournent, le produit fondu minéral versé sur la périphérie du rotor supérieur (4) est projeté sur la périphérie de chaque rotor de fibrage successif (5, 6, 7) en séquence et des fibres minérales (41) sont projetées par chaque rotor de fibrage, et dans lequel au moins un des rotors de fibrage est doté des moyens d'alimentation en air annulaires (8, 9, 10) et le au moins un conduit d'alimentation en liant (35) est positionné pour éjecter le liant dans le courant d'air brutal, comme défini dans l'une quelconque des revendications 1 à 6.

12. Procédé de fabrication d'un produit de fibres vitreuses liées comprenant le fibrage d'un produit fondu minéral en utilisant l'appareil selon l'une quelconque des revendications précédentes tout en formant un courant d'air brutal comprenant un jet sur paroi sur la surface de fibrage (30) et en appliquant un liant par le biais du conduit d'alimentation en liant (35) et de la sortie d'extrusion (37) dans le courant d'air brutal, en collectant les fibres (41) porteuses du liant sous la forme d'une bande et en durcissant le liant.
